# EUROPÄISCHE PATENTANMELDUNG

(11) **EP 1 802 124 A2**
(43) Veröffentlichungstag der Anmeldung: **27.06.2007**
(21) Anmeldenummer: 06024988.5
(22) Anmeldetag: 04.12.2006
(51) Int. Cl.: H04N 7/26

(54) **Verfahren zum Komprimieren von Daten, Verfahren zum Dekomprimieren komprimierter Daten und Vorrichtungen dazu**

(30) Priorität: 22.12.2005 DE 102005062077
(71) Anmelder: Micronas GmbH, 79108 Freiburg i. Br. (DE)
(72) Erfinder: Götz, Matthias, 79110 Freiburg (DE); Söhne, Thomas, 79183 Waldkirch (DE)
(74) Vertreter: Patentanwälte Westphal, Mussgnug & Partner

(57) **Zusammenfassung**

Die Erfindung bezieht sich auf ein Verfahren zum Komprimieren von Daten, bei dem
- eine in eine Komprimierungseinrichtung eingegebene Abfolge von Daten (b) wahlweise entweder komprimiert oder nicht komprimiert wird und von der Komprimierungseinrichtung als komprimierte bzw. nicht komprimierte Daten (b°, s°) bereitgestellt wird,
- wobei durch die Komprimierungseinrichtung vor dem Bereitstellen eine Statusinformation (S) in einer Abfolge der bereitgestellten Daten (b°, s°) über zumindest einen Wert der bereitgestellten Daten überschrieben wird,
- wobei die Abfolge der bereitgestellten Daten (b°, s°) aus komprimierten und nicht komprimierten Daten (b°, s°) besteht und
- wobei die Statusinformation (S) anzeigt, ob zur Statusinformation (S) zugeordnete Anteile der bereitgestellten Daten (b°, s°) komprimiert sind oder nicht. Außerdem bezieht sich die Erfindung auf ein entsprechendes Dekomprimierungsverfahren, welches zur Entscheidung einer Dekomprimierung die eingebettete Statusinformation (S) verwendet.

## Beschreibung

Die Erfindung bezieht sich auf ein Verfahren zum Komprimieren von Daten gemäß den oberbegrifflichen Merkmalen des Patentanspruchs 1, auf ein Verfahren zum Dekomprimieren derart komprimierter Daten bzw. auf Vorrichtungen zum Durchführen solcher Verfahren.

Moderne Systeme zur Videosignal-Verarbeitung stellen wegen zunehmender Bildauflösungen und Bildqualitäten immer höhere Anforderungen an Größe und Geschwindigkeit darin eingesetzter Bildspeicher. Ein Einsatz von Verfahren zur Datenkomprimierung stellt ein effektives Mittel dar, um einen vorhandenen Speicherraum effektiver zu nutzen und um eine Speicherzugriffsrate zu reduzieren. Da eine Datenkomprimierung zu einer Verschlechterung der Bildqualität führen kann, sollte sie jedoch nur dann zum Einsatz kommen, wenn beispielsweise aufgrund der begrenzten Speicherbandbreite bestimmte Zusatzfunktionen nur durch Komprimierung der Bilddaten möglich sind. Daher wäre es vorteilhaft, die Komprimierung und Dekomprimierung der Bilddaten im laufenden Betrieb ein- und auszuschalten.

Mit Hilfe von Datenkomprimierung soll die Leistungsfähigkeit von Systemen zur Bildsignal- bzw. Videosignalverarbeitung gesteigert werden. Das Umschalten zwischen komprimierten und nicht-komprimierten Daten führt jedoch bei Funktionen, welche sowohl unverzögerte als auch verzögerte Bilddaten benötigen, zu Fehlern bei einem Umschaltvorgang, wobei sich die Fehler im Bild störend bemerkbar machen.

Kommen bildverarbeitende Funktionen zum Einsatz, welche auf unterschiedlich verzögerte Daten, beispielsweise um eines oder mehrere Halbbilder (field) bzw. Vollbilder (frame) verzögerte Daten, zugreifen müssen, wie dies beispielsweise bei einem De-Interlacer oder einem Bildraten-Konvertierer der Fall sein kann, so entstehen während des Umschaltens Bildfehler, da verzögerte und unverzögerte Bilder nicht denselben Komprimierungsstatus haben. Ein De-Interlacer dient dabei dazu, Video-Halbbilder durch Verdoppelung von Bildzeilen in Vollbilder umzuwandeln. Beim Umschalten bzw. in einem Zeitraum nach dem Umschalten werden fälschlicherweise komprimierte Daten als unkomprimierte Daten betrachtet bzw. umgekehrt. Im ungünstigsten Fall können dadurch mehrere aufeinander folgende Bilder beispielsweise durch falsche Farben völlig zerstört sein. Dies würde sich auf einem Bildschirm durch lästiges Bildflackern bemerkbar machen, was nicht akzeptabel ist.

Um dieses Problem zu vermeiden, wird derzeit im laufenden Betrieb auf das Umschalten verzichtet. Entsprechend kommt keine Datenkomprimierung zum Einsatz. Dadurch können jedoch bestimmte Zusatzfunktionen, welche eine höhere Speicherzugriffsrate erfordern würden, nicht realisiert werden. Gemäß einer alternativen Verfahrensweise werden die Bilddaten ständig komprimiert. Damit wird aber auch in dem Fall, in dem eigentlich keine Komprimierung erforderlich wäre, keine optimale Bildqualität erzielbar.

Die Aufgabe der Erfindung besteht darin, ein verbessertes Verfahren zum Komprimieren von Daten bzw. zum Dekomprimieren derart komprimierter Daten vorzuschlagen. Bereitgestellt werden sollen auch Vorrichtungen zum Durchführen derartiger Verfahren.

Diese Aufgabe wird gelöst durch ein Verfahren zum Komprimieren von Daten mit den Merkmalen des Patentanspruchs 1, durch ein Verfahren zum Dekomprimieren derart komprimierter Daten mit den Merkmalen des Patentanspruchs 12 bzw. durch Vorrichtungen zum Durchführen solcher Verfahren mit den Merkmalen der Patentansprüche 14 bzw. 15. Vorteilhafte Ausgestaltungen sind Gegenstand abhängiger Ansprüche.

Bevorzugt wird demgemäss ein Verfahren zum Komprimieren von Daten, bei dem eine in eine Komprimierungseinrichtung eingegebene Abfolge von Daten wahlweise entweder komprimiert oder nicht komprimiert wird und von der Komprimierungseinrichtung als komprimierte bzw. nicht komprimierte Daten bereitgestellt wird. Vorteilhaft wird das Verfahren dadurch, dass durch die Komprimierungseinrichtung vor dem Bereitstellen eine Statusinformation in einer Abfolge der bereitgestellten Daten über zumindest einen Wert der bereitgestellten Daten überschrieben wird, wobei die Abfolge der bereitgestellten Daten aus komprimierten und nicht komprimierten Daten besteht und wobei die Statusinformation anzeigt, ob zur Statusinformation zugeordnete Anteile der bereitgestellten Daten komprimiert sind oder nicht.

Als Daten können sowohl Nutzdaten als auch Steuerdaten komprimiert/dekomprimiert und abgespeichert werden. Die Steuerdaten bestehen in einer Video- bzw. Bildsignalverarbeitung aus Synchronisationsinformationen sowie weiteren Steuerdaten, welche aktive Bildinhalte markieren. Diese Steuerdaten werden zur Synchronisation der einzelnen Blöcke verwendet und zeigen dem Speicher an, welche Daten abzuspeichern sind. Dadurch wird unter anderem vermieden, dass nicht sichtbare Bildbereiche, beispielsweise eine horizontale oder vertikale Austastlücke, unnötig Speicher belegen. Die Steuerdaten selbst müssen aber nicht notwendig gespeichert werden.

Bevorzugt wird die Statusinformation an eindeutig zugeordneten Positionen der Abfolge der bereitgestellten Daten eingesetzt. Die eindeutig zugeordneten Positionen können einem bestimmten Bit innerhalb einer zyklischen Bit-Folge oder zyklischen Rahmenfolge in der Abfolge der bereitgestellten Daten zugeordnet werden. Die eindeutig zugeordneten Positionen können abhängig von einem Steuersignal, das der eingegebenen Abfolge von Daten zugeordnet ist, in der Abfolge der bereitgestellten Daten zugeordnet werden. Die eindeutig zugeordneten Positionen können auch abhängig von einem Schaltsignal zum Schalten eines Komprimierungs- oder Nicht-Komprimierungsbetriebs zugeordnet werden.

Sowohl Nutzdaten als auch den Nutzdaten fest zugeordnete Steuersignale können komprimiert werden. Die bereitgestellten Daten werden zweckmäßig in einem Speicher abgespeichert.

Zur Vereinfachung wird die Statusinformation unter Verlust einer Nutzdaten-Information und/oder einer Steuersignal-Information über eigentliche Nutzdaten oder Steuerdaten geschrieben.

Besonders bevorzugt besteht die eingegebene Abfolge von Daten aus Bilddaten. Die Statusinformation wird dabei vorteilhaft über zumindest einen Luminanzwert geschrieben, wobei nachfolgende Chrominanzwerte entsprechend wahlweise komprimiert oder nicht komprimiert werden. Zumindest ein Teil der Luminanzwerte wird entsprechend nicht komprimiert, um die Statusinformation besonders einfach auslesen zu können.

Bevorzugt wird entsprechend auch ein Verfahren zum Dekomprimieren einer Abfolge teilweise komprimiert bereitgestellter Daten, insbesondere zum Dekomprimieren bereitgestellter Daten, die mit einem solchen Verfahren teilweise komprimiert wurden, wobei in der Abfolge der bereitgestellten Daten eine Statusinformation eingesetzt ist, wobei die Statusinformation durch eine Dekomprimierungseinrichtung verwendet wird, um die bereitgestellten Daten entweder als komprimierte Daten zu dekomprimieren oder als nicht komprimierte Daten nicht zu dekomprimieren und entsprechend Daten in Form der dekomprimierten oder der nicht komprimierten Daten auszugeben an eine Datenverarbeitungseinrichtung und/oder an einen Ausgang.

Beim Komprimieren der bereitgestellten Daten und/oder bei einer nachfolgenden Datenverarbeitung wird eine Verzögerung über eine bestimmte zyklische Bit-Folge oder Rahmen-Folge vorgenommen.

Die vorgestellten Verfahren beruhen darauf, dass Informationen zum Bildstatus bzw. zum Komprimierungsstatus von Bilddaten in einen Datenstrom derartiger Daten in geeigneter Weise eingebettet sind bzw. eingebettet werden, so dass eine automatische fehlerfreie Verarbeitung von aus einem Speicher ausgelesenen Daten unabhängig von den tatsächlichen Umschaltvorgängen durchführbar ist. Insbesondere ermöglichen die Verfahren eine optimale Ausnutzung vorhandener Ressourcen, indem sie das Ein- und Ausschalten einer Datenkomprimierung im laufenden Betrieb ermöglichen. Dazu werden an festgelegten Positionen Statusinformationen in den Datenstrom eingebettet, welche es der Daten-Dekomprimierung ermöglichen, den Komprimierungsstatus jederzeit zu erkennen und damit sowohl die durch den Speicher verzögerten oder von einer Schnittstelle verzögert empfangenen als auch die unverzögerten Daten fehlerfrei weiterzuverarbeiten.

Die Verfahren und Vorrichtungen sind insbesondere dort einsetzbar, wo komprimierte Bilddaten gespeichert werden, wie beispielsweise in De-Interlacern, Bildraten-Konvertierungen oder Bild-in-Bild-Anwendungen. Insbesondere ist vorteilhaft, dass die Verfahren nicht auf den Einsatz der vorzunehmenden Datenkomprimierung beschränkt sind und auch nicht auf eine spezielle Datenkomprimierung beschränkt sind.

Nachfolgend wird ein Ausführungsbeispiel anhand der Zeichnung näher erläutert. Es zeigen:
- Fig. 1: schematisch eine Anordnung von beispielhaften Schaltungs-Komponenten zum Komprimieren, Speichern und Dekomprimieren von Bilddaten und
- Fig. 2: beispielhafte Datenabfolgen vor einer Komprimierung bzw. nach einer Komprimierungsstufe, wobei im ersten Fall die Komprimierung ausgeschaltet und im zweiten Fall die Komprimierung eingeschaltet ist.

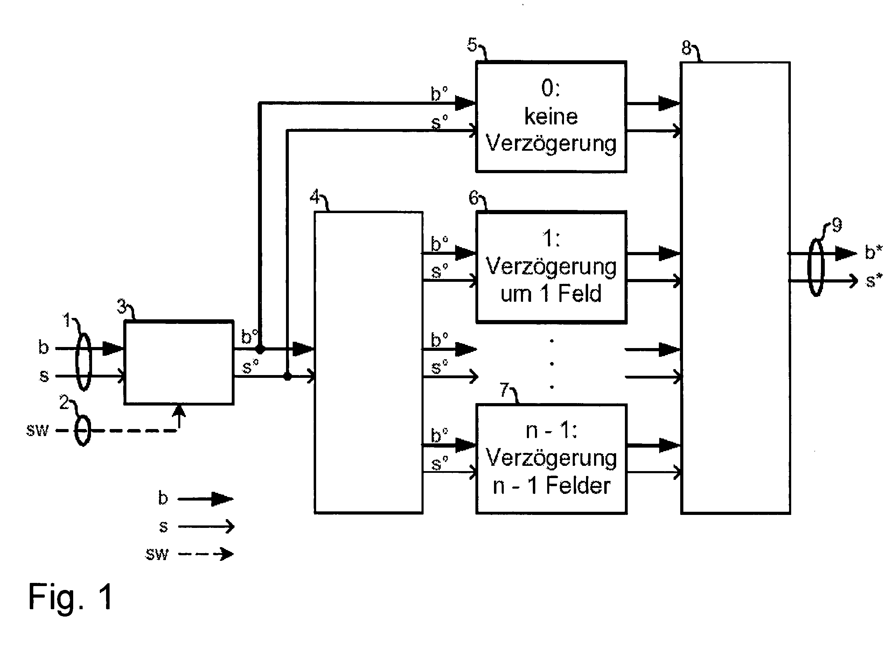

Fig. 1 zeigt schematisch einzelne beispielhafte Komponenten einer bevorzugten Schaltungsanordnung zum Empfangen, wahlweisen Komprimieren, Speichern, wahlweisen Dekomprimieren und Verarbeiten von Bilddaten. Gemäß alternativer Ausführungsformen sind Modifikationen derartiger Anordnungen möglich. Beispielsweise können die Komprimierung und Speicherung von Daten in einer ersten Einheit vorgenommen werden und die Dekomprimierung und Weiterverarbeitung der Daten in einer zweiten Einheit vorgenommen werden, welche von der ersten Einheit unabhängig ist und die teilweise komprimierten Daten übertragen bekommt. Auch kann ein Zwischenspeichern derart komprimierter Daten gegebenenfalls entfallen, was beispielsweise in Kommunikations-Systemen denkbar ist, in denen komprimierte Daten über eine Schnittstelle übertragen werden und empfängerseitig die empfangenen komprimierten Daten direkt dekomprimiert werden.

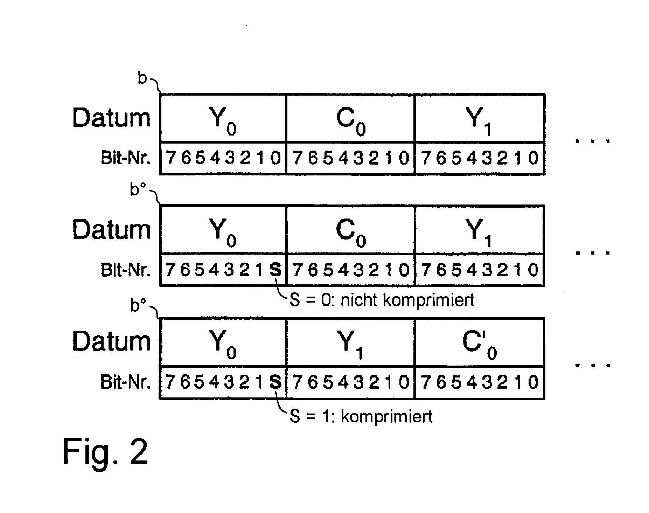

Neben der beschriebenen Ausgestaltung mit einer Vielzahl untereinander verbundener Komponenten ist auch eine Umsetzung in integrierter Bauweise möglich, bei der einzelne oder alle beschriebenen Komponenten in einer integrierten Schaltungseinrichtung aufgenommen sind. Außerdem möglich ist die Aufgliederung und Verteilung verschiedener der Komponenten auf verschiedene eigenständige Vorrichtungen oder verschiedene eigenständige Komponenten einer übergeordneten Anordnung. Fig. 1 entspricht somit, wie auch Fig. 2, lediglich einem einfachen schematischen Beispiel.

Fig. 1 zeigt einen Eingang 1, an welchem Bilddaten b und Steuersignale s als eingegebene Daten eingegeben werden. Außerdem werden über den Eingang 1, einen weiteren Eingang 2 oder eine übergeordnete Steuereinrichtung Schaltsignale sw bereitgestellt. Sowohl die Bilddaten b, als auch die Steuersignale s und die Schaltsignale sw werden einer Komprimierungseinrichtung 3 angelegt. Die Komprimierungseinrichtung 3 komprimiert die Bilddaten b und gegebenenfalls auch die Steuersignale, wenn ein entsprechendes Schaltsignal sw anliegt. Anderenfalls werden die Bilddaten b unkomprimiert weitergeleitet.

Mittels der Schaltsignale sw kann somit festgelegt werden, ob eine Komprimierung für bestimmte Datenanteile einer Abfolge eingegebener Daten durchgeführt werden soll oder nicht. Alternativ kann aber auch die Komprimierungseinrichtung bei entsprechender Ausgestaltung selber entscheiden, ob bestimmte Anteile einer Abfolge eingegebener Daten zu komprimieren sind oder nicht, so dass das Schaltsignal sw optional auch entfallen kann.

Die Komprimierungseinrichtung 3 gibt über einen Ausgang die entsprechend komprimierten oder nicht-komprimierten Bilddaten b und Steuersignale s als bereitgestellte Daten an einen Bildspeicher 4 aus, in welchem die entsprechenden Daten und Signale gespeichert werden. Außerdem ist beispielhaft vorgesehen, dass von der Komprimierungseinrichtung 3 ausgegebene Bilddaten b und Steuersignale s zusätzlich auch einer Dekomprimierungseinrichtung 5 angelegt werden, welche ohne Verzögerung arbeitet. Parallel zu dieser ersten Dekomprimierungseinrichtung 5 sind beliebig viele weitere Dekomprimierungseinrichtungen 6 für eine Verzögerung um ein Feld bis hin zu einer Dekomprimierungseinrichtung 7 zur Verzögerung um n - 1 Felder bzw. Bilder bereitgestellt. Um die Dekomprimierungseinrichtungen 5, 6, 7 mit entsprechenden Bilddaten zu versorgen, werden die Bilddaten insbesondere vom Bildspeicher 4 angefordert und bereitgestellt.

Nach der Zuführung von Bilddaten aus dem Bildspeicher 4 zu den Dekomprimierungseinrichtungen 5 - 7 und einer Dekomprimierung komprimierter Anteile der bereitgestellten Bilddaten b° wird eine bildverarbeitende Funktion in einer zentralen Steuereinrichtung bzw. bildverarbeitenden Funktion durchgeführt. Die bildverarbeitende Funktion ist beispielhaft in einer Datenverarbeitungs-Einrichtung 8 aufgenommen, welche an einem Ausgang 9 entsprechend verarbeitete Bilddaten b* und Steuersignale s* bereitstellt.

Verfahrensgemäß werden die Bilddaten b zur Komprimierung am Eingang 1 bereitgestellt und mittels der Komprimierungseinrichtung 3 komprimiert und schließlich in den Bildspeicher 4 geschrieben, wobei die Komprimierung mittels der Komprimierungseinrichtung 3 über den Zustand des Schaltsignals sw zu beliebigen Zeitpunkten ein- und ausgeschaltet werden kann. Der eigentliche Komprimiervorgang wird vorzugsweise abhängig vom Schaltsignal sw sowie abhängig von einer durch die Steuersignale s vorgegebenen Verzögerung beispielsweise synchron zu horizontalen oder vertikalen Synchronisationsimpulsen ein- oder ausgeschaltet. Der tatsächliche Status der Komprimierung wird in geeigneter Art und Weise in den Datenstrom selber eingebettet.

Eine bildverarbeitende Funktion liest anschließend Daten aus dem Speicher aus, die um eines oder mehrere Felder verzögert sind. Eine solche Funktion kann auch auf einen unverzögerten Datenstrom zugreifen. Da die bildverarbeitende Funktion den Komprimierungsstatus nicht über das Schaltsignal erhält, sondern aus dem Datenstrom rekonstruiert, ist sichergestellt, dass die Daten in jedem Fall richtig behandelt werden. Es kann somit nicht passieren, dass nach dem Einschalten der Komprimierung noch unkomprimierte Daten aus dem Speicher ausgelesen werden und diese aber fälschlicherweise bereits als komprimierte Daten behandelt werden, da irgend ein für die Dekomprimierung nun entbehrliches Schaltsignal anzeigt, dass komprimierte Daten vorliegen.

Ein Einbetten und Rekonstruieren von derartigen Statusinformationen in den Datenstrom hinein wird vorzugsweise unter Überschreiben von Bilddaten b oder gegebenenfalls Steuersignalen s durchgeführt. Bevorzugt wird daher zum Komprimieren ein Verfahren, welches einen möglichst vernachlässigbaren Einfluss auf die sichtbaren Bildanteile hat. Außerdem sollte eine Rekonstruktion der Statusinformation, welche vom verwendeten Komprimierungsverfahren abhängt, verfügbar sein. Bei der Rekonstruktion komprimierter Daten ist zu beachten, ob es sich um komprimierte oder unkomprimierte Daten handelt. Die Statusinformation soll sich also an definierter Stelle befinden, die vom Komprimierungsstatus unabhängig ist.

Fig. 2 zeigt beispielhaft Positionen der Statusinformation bei einer 4:2:2/4:1:1-Komprimierung. Nachfolgend wird beispielhaft die Einbettung und Rekonstruktion der Statusinformation, das heißt der Information, ob komprimierte oder nicht-komprimierte Daten vorliegen, für ein lediglich beispielhaftes Komprimierungsverfahren beschrieben, welches Bildsignale, die im 4:2:2-Format mit 16 Bit pro Pixel vorliegen, ins 4:1:1-Format mit 12 Bit pro Pixel konvertiert. Für den Fall, dass die Statusinformation aus einem Bit (Daten komprimiert/unkomprimiert) besteht, kann wie folgt vorgegangen werden.

Der erste oder gegebenenfalls auch ein x-ter gültiger Pixel bzw. Bildpunkt nach einem durch die Steuersignale s definierten Ereignis, beispielsweise in Form eines horizontalen oder vertikalen Synchronisationsimpulses, wird mit der Statusinformation S überschrieben. Zu diesen Zeitpunkten ist das Umschalten des Komprimierungs- und damit auch des Dekomprimierungsmodus bzw. -status möglich. Da das erste Pixel im Allgemeinen später ohnehin nicht sichtbar ist, werden durch die Statusinformation S hervorgerufene Bildfehler reduziert, sofern überhaupt Bildfehler auftreten.

Da ein solches Verfahren insbesondere nur den Luminanzwert, nicht jedoch den Chrominanzwert verändert, kann ein eventueller Einfluss der Statusinformation S auf das sichtbare Bild weiter vermindert werden, indem für die Statusinformation S das niedrigst-wertige Bit oder bei beispielsweise mehreren einzubettenden Informationen die niedrigst-wertigsten Bit des ersten Luminanzwertes verwendet werden. Eine solche Position des Bits ist sowohl für komprimierte als auch für unkomprimierte Daten identisch.

Fig. 2 zeigt in einer ersten Zeile Daten b eines Bildsignals vor der Zuführung zur Komprimierungseinrichtung 3. Ein beispielhaftes Datum der Daten b besteht aus einem nullten Luminanzwert-Pixel Yi und erstreckt sich über die Bit-Nummern 0-7. Es folgen un-komprimierte Chrominanzwert-Pixel Cᵢ zu unkomprimierten Daten über die beispielsweise nächsten 8 Bit-Nummern. Letztendlich folgt in der dargestellten Ausführung ein Luminanzwert Yᵢ hinter dem Chrominanzwert-Pixel Cᵢ mit ebenfalls jeweils 8 Bit bzw. 8 Bit-Nummern.

In der mittleren Zeile ist ein Datum für den Fall einer Durchleitung durch die Komprimierungseinrichtung 3 ohne das Durchführen einer Komprimierung dargestellt. Die erste Bit-Nummer 0 des ersten Luminanzwert-Pixels wird dabei als Zustands-Bit bzw. Status-Bit und somit als die Statusinformation S verwendet. Das derart gebildete Status-Bit überschreibt jegliche vorherige Information im Zweifelsfall unwiederbringlich. Es folgen wieder nicht-komprimierte Chrominanzwert-Pixel C₀ und Luminanzwert-Pixel Y₁, was durch das entsprechende Status-Bit S = 0 signalisiert ist. Letztendlich ist in der dritten Zeile ein Fall dargestellt, bei dem das Datum aus einer ersten Gruppe von Luminanzwerten Y₀ und einer zweiten Gruppe aus Luminanzwerten Y₁ besteht, welche jeweils 8 Bit und entsprechend 8 Bit-Nummern aufweisen. Die dritte Gruppe besteht aus komprimierten Chrominanzwert-Pixeln C'₀, wobei diese komprimiert sind, was durch das entsprechende Status-Bit S = 1 signalisiert ist.

Prinzipiell ist kein spezielles Komprimierungsverfahren zu verwenden. Bei anderen Komprimierungsverfahren, welche sich sowohl auf die Luminanz- als auch auf die Chrominanz-Information auswirken, ist es jedoch gegebenenfalls nicht möglich, das niedrigst-wertige Bit des Luminanzwerts des ersten Pixels für die Statusinformation zu verwenden. In einem solchen Fall kann beispielsweise generell das erste Bit des Datenstroms für die Statusinformation verwendet werden.

## Patentansprüche

1. Verfahren zum Komprimieren von Daten, bei dem
- eine in eine Komprimierungseinrichtung (3) eingegebene Abfolge von Daten (b) wahlweise entweder komprimiert oder nicht komprimiert wird und von der Komprimierungseinrichtung (3) als komprimierte bzw. nicht komprimierte Daten (b°, s°) bereitgestellt wird,
**dadurch gekennzeichnet, dass**
- durch die Komprimierungseinrichtung (3) vor dem Bereitstellen eine Statusinformation (S) in einer Abfolge der bereitgestellten Daten (b°, s°) über zumindest einen Wert der bereitgestellten Daten überschrieben wird,
- wobei die Abfolge der bereitgestellten Daten (b°, s°) aus komprimierten und nicht komprimierten Daten (b°, s°) besteht und
- wobei die Statusinformation (S) anzeigt, ob zur Statusinformation (S) zugeordnete Anteile der bereitgestellten Daten (b°, s°) komprimiert sind oder nicht.

2. Verfahren nach Anspruch 1, bei dem die Statusinformation (S) an eindeutig zugeordneten Positionen (Bit-Nr.) der Abfolge der bereitgestellten Daten (b°, s°) eingesetzt wird.

3. Verfahren nach Anspruch 2, bei dem die eindeutig zugeordneten Positionen (Bit-Nr.) einem bestimmten Bit (Bit-Nr.=0) innerhalb einer zyklischen Bit-Folge oder zyklischen Rahmenfolge in der Abfolge der bereitgestellten Daten (b°, s°) zugeordnet werden.

4. Verfahren nach Anspruch 2 oder 3, bei dem die eindeutig zugeordneten Positionen (Bit-Nr.) abhängig von einem Steuersignal (s), das der eingegebenen Abfolge von Daten (b) zugeordnet ist, in der Abfolge der bereitgestellten Daten (b°, s°) zugeordnet werden.

5. Verfahren nach einem der Ansprüche 2 bis 4, bei dem die eindeutig zugeordneten Positionen abhängig von einem Schaltsignal (sw) zum Schalten eines Komprimierungs- oder Nicht-Komprimierungsbetriebs zugeordnet werden.

6. Verfahren nach einem vorstehenden Anspruch, bei dem die bereitgestellten Daten (b°, s°) in einem Speicher (4) abgespeichert werden.

7. Verfahren nach einem vorstehenden Anspruch, bei dem die Statusinformation (S) unter Verlust einer Nutzdaten-Information und/oder einer Steuersignal-Information über eigentliche Nutzdaten oder Steuerdaten geschrieben wird.

8. Verfahren nach einem vorstehenden Anspruch, bei dem die eingegebene Abfolge von Daten (b) aus Bilddaten besteht.

9. Verfahren nach Anspruch 8, bei dem die Statusinformation (S) über zumindest einen Luminanzwert (Y) geschrieben wird und nachfolgende Chrominanzwerte (C) entsprechend wahlweise komprimiert oder nicht komprimiert werden.

10. Verfahren nach Anspruch 9, bei dem zumindest ein Teil der Luminanzwerte (Y) nicht komprimiert wird.

11. Verfahren nach einem vorstehenden Anspruch, bei dem sowohl Nutzdaten (b) als auch den Nutzdaten fest zugeordnete Steuersignale (s) komprimiert werden.

12. Verfahren zum Dekomprimieren einer Abfolge teilweise komprimiert bereitgestellter Daten (b°, s°), insbesondere zum Dekomprimieren bereitgestellter Daten, die mit einem Verfahren nach einem vorstehenden Anspruch bereitgestellt wurden, **dadurch gekennzeichnet, dass**
- in der Abfolge der bereitgestellten Daten (b°, s°) eine Statusinformation (S) eingesetzt ist, wobei die Statusinformation (S) durch eine Dekomprimierungseinrichtung (5 - 7) verwendet wird, um die bereitgestellten Daten entweder als komprimierte Daten zu dekomprimieren oder als nicht-komprimierte Daten nicht zu dekomprimieren und entsprechend Daten in Form der dekomprimierten oder der nicht komprimierten Daten (b*, s*) auszugeben an eine Datenverarbeitungseinrichtung (8) und/oder an einen Ausgang (9).

13. Verfahren nach Anspruch 12, bei dem beim Komprimieren der bereitgestellten Daten (b°, s°) und/oder bei einer nachfolgenden Datenverarbeitung eine Verzögerung über eine bestimmte zyklische Bit-Folge oder Rahmen-Folge vorgenommen wird.

14. Vorrichtung mit einer Komprimierungseinrichtung (3) zum wahlweisen Komprimieren oder Nicht-Komprimieren einer eingegebenen Abfolge von Daten (b, s) gemäß einem Verfahren nach einem der Ansprüche 1 bis 11.

15. Vorrichtung zum wahlweisen Dekomprimieren oder Nicht-Dekomprimieren einer Abfolge bereitgestellter Daten (b°, s°) abhängig von einer Statusinformation (S) gemäß einem Verfahren nach Anspruch 12 oder 13.
